# EUROPEAN PATENT SPECIFICATION

(11) **EP 1 645 540 B1**
(45) Date of publication and mention of the grant of the patent: **28.06.2017**
(21) Application number: 04425745.9
(22) Date of filing: 06.10.2004
(51) Int. Cl.: C01B 3/38, C01B 3/58, B01J 8/04, B01B 1/00

(54) **Apparatus and process for the production of hydrogen and synthesis gas from liquid hydrocarbons**
Vorrichtung und Verfahren zur Herstellung von Wasserstoff und Synthesegas aus flüssigen Kohlenwasserstoffen
Appareil et procédé pour la production d'hydrogène et de gaz de synthèse à partir d'hydrocarbures liquides

(43) Date of publication of application: 12.04.2006
(73) Proprietor: KT - Kinetics Technology S.p.A., 00148 Roma (IT)
(72) Inventor: Iaquaniello, Gaetano, 00153 Roma (IT)
(74) Representative: Sarpi, Maurizio

(56) References cited:
- WO-A-02/087744
- WO-A-02/088022
- US-A1- 2001 009 653
- US-A1- 2003 051 405
- US-A1- 2004 163 311

## Description

The present invention generally relates to fuel processors to convert liquid hydrocarbons into hydrogen and synthesis gas, and particularly an apparatus for the integration of the process equipment necessary for the catalytic reforming and the desulphurisation as well as all of the chemical reactors and components in only one container.

More specifically, the object of the present invention is an autothermal reformer that integrates mechanically and thermally several reactions (reforming and desulphurisation) and several components (static mixer, two catalytic beds and two plate-type exchangers) into only one metal container, thus allowing a light-weight, compact, effective apparatus to be provided that fully meets the requirements of the melted-salt fuel cells in terms of composition, pressure and temperature, and size/weight of the conversion module.

### FIELD OF THE INVENTION

It has been known for a long time that the electrochemical devices such as fuel cells have great advantages over more conventional devices for generation of energy. Just by virtue of the nature of the electrochemical conversion of hydrogen and an oxidizer into electricity, the fuel cell is not subject to the limitations of the internal-combustion engines which produce mechanical work from heat. Melted-carbonate fuel cells can operate with hydrogen or synthesis gas and utilize fuel processors that use liquid hydrocarbons such as gasoline and methanol, thus providing the batch mixture so that they are preferable in terms of storage capacity, weight, and facilities. Furthermore, fuel cell systems operate with hydrocarbon fuels and are also preferable as for thermal efficiency with respect to conventional devices. At last, the emissions of carbon dioxide, carbon monoxide, and nitrogen oxides are comparatively low.

Notwithstanding their potential, the technology of fuel processors as hydrogen source for the fuel cell systems, however, is largely left unused because of a variety of reasons, not least the cost.

The main reason is also the size and the complexity of the fuel processor. Such complexity results to a great degree from the need for dealing with a sequence of many operations during the chemical conversion to pass from the chemical energy of hydrocarbon fuels to a gas rich in hydrogen. For this reason, it is very difficult today to include the whole fuel cell system into small rooms, for example a vehicle or transport means, and to limit the cost like other technologies. From US 2003/051405 A1 it is known an apparatus suitable for the production of hydrogen rich gas from gaseous or liquid hydrocarbon fuels comprising a multi-step process in only one vessel through either autothermal reforming or steam reforming. However, said apparatus concern PEM cells which operate at low temperature.

US 2004/163311 A1 discloses a system of mixed reforming (steam reforming + autothermal or partial oxidation) which operates with 02 to feed PEM cells, thus always at low temperature. The relating fuel processor is enclosed in a housing and it is provided with a candle in order to trigger the reactions.

The present invention seeks to overcome all of the problems mentioned above by providing an apparatus according to claim 1, and a method according to claim 3, to produce from liquid hydrocarbons hydrogen and synthesis gas without sulphur that can be used directly in melted-salt fuel cells.

According to another aspect of the invention the above-mentioned apparatus provides monolithic reforming catalysers and plate-type exchangers to minimize the pressure loss from the pressure of the produced gas and the pressure of the input charge. According to another aspect of the invention said apparatus does not resort to conventional refractory materials which would cause the apparatus to be more cumbersome and heavier.

According to another aspect of the invention the apparatus is provided with means for removing sulphur from the charge without using hydrogen.

According to another aspect of the invention the final temperature of the gases after desulphurisation is like the temperature of use of the melted-salt fuel cells (about 650°C).

According to another aspect of the invention the apparatus allows a gas to be produced at high temperature after desulphurisation without additional fuel consumption through a full recovery of heat in counter-current by exchange of heat between the gas to be desulphurized and the already desulphurized gas.

Further advantages and features of the invention will be more readily apparent from the following description with reference to the accompanying drawings that show by way of a not limiting example a preferred embodiment of the installation according to the invention.

In the drawings:

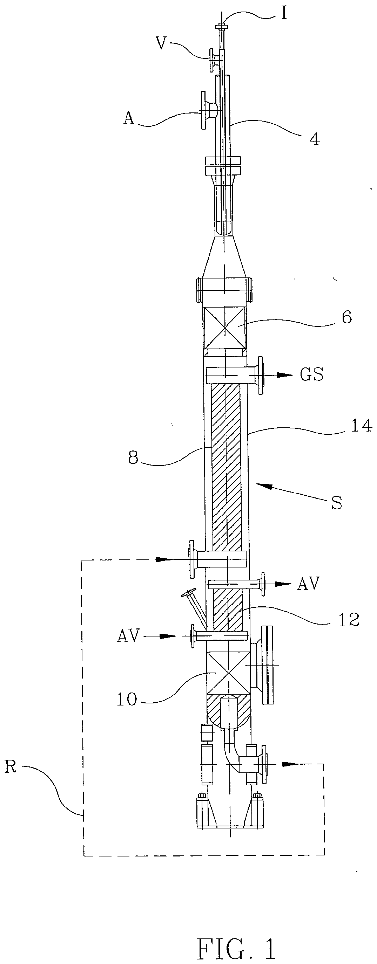

Fig. 1 shows the assembly of the several components of the apparatus according to the invention;
Fig. 2 shows the diagram of the temperature of the produced gas along the axis of the apparatus.

With reference to the accompanying drawings, the apparatus according to a first embodiment of the invention includes:
- a static mixer 4 where the vaporized hydrocarbon from line I and reaction vapour from line V are mixed with process air from line A. The amounts of the reagents and then their ratios are determined by the characteristics of the hydrocarbon. The temperature of the reagents should be greater than the self-ignition point so as to make the ignition automatic without special devices once the mixing is carried out;
- a bed 6 of monolithic noble-metal catalyst to which the mixture of hydrocarbons, air and vapour from mixer 4 is fed at the temperature of 950-1000°C and the pressure of 10 bar,
   where a gas rich in hydrogen is produced from such mixture; and
   the reforming reaction is autothermal, the heat being provided by the reaction of a portion of the hydrocarbon with the process air. According to ratios between the several components of the mixture a gas rich in hydrogen is obtained containing carbon monoxide, carbon dioxide, and the excess of steam which did not react as well as a residual amount of not reformed methane the greater the pressure, the lower the reforming temperature;
- a plate-type exchanger S to cool the gas produced by the reforming reaction until the desulphurisation temperature;
- a catalytic reactor 10 to remove H₂S formed during the reforming reaction within a metal case 14 enclosing the elements mentioned above.

According to a feature of the invention, the purified output gas of catalytic reactor 10 is fed back through feedback line R to plate-type exchanger S to be heated until the temperature of use in the fuel cells (about 650°C) by counter-current heat exchange between the gas to be desulphurized and the already desulphurized gas.

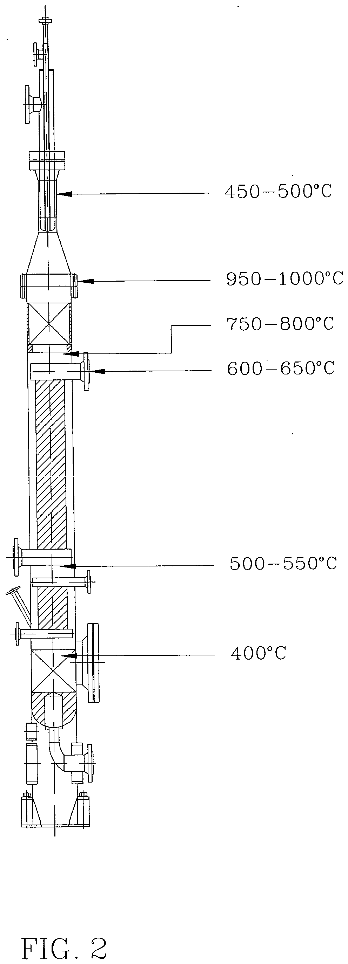

The gas temperature diagrams along the axis of the apparatus are shown in fig. 2.
As can be seen, according to a preferred embodiment, heat exchanger S consists of a pair of exchangers 8 and 12 in series to each other so that the cooling of the reforming gas is carried out by two different exchangers in order to utilize the exchanged heat both to lead the purified gas from 400°C to 650°C (output gas GS) which is the operating temperature of the fuel cells (upstream exchanger 8) and to heat a water and vapour current AV (downstream exchanger 12).

The apparatus according to the invention allows a number of substantial advantages to be achieved, including:
- flexibility regarding the charges from LPG to heavy diesel;
- production of a desulphurized gas with low loss of total load;
- integration of several unit operations and components into only one apparatus;
- construction of the apparatus without using conventional refractory materials which would make the same more cumbersome and heavier;
- control of the output gas temperature even if the desulphurisation has been carried out at a lower temperature according to the requirements of the fuel cells which can be reached without additional fuel consumption through the counter-current heat exchange between the gas to be desulphurized and the already desulphurized gas.
- final desulphurisation of the gases without adding hydrogen.

The present invention has been described and illustrated according to a preferred embodiment thereof, however, it should be understood that those skilled in the art can make a number of modifications and changes without departing from the scope of the present invention as defined in the appended claims.

## Claims

1. An apparatus for the production of hydrogen and synthesis gas by autothermal reforming of liquid hydrocarbons comprising:
- a static mixer (4) for mixing the vaporized hydrocarbon and steam;
- a monolithic noble-metal catalyst bed (6);
- a plate-type structure (S) for the heat exchanger
- a catalytic reactor (10) to remove H2S formed during the reforming reaction,
- a metallic case (14) enclosing the elements mentioned above,
**characterized in that**:
- the bed of monolithic noble-metal catalyst is suitable for the autothermal reforming of the mixture of vaporized hydrocarbons, air and steam (water vapour) fed from the static mixer at a temperature of 950 to 1000°C and a pressure of 10 bar;
- the plate-type heat exchanger (S) is suitable for cooling the gas produced by the reforming reaction until the desulphurization temperature;
- the heat exchanger (S) consists of two exchangers in series, the first exchanger (8) being placed upstream and exchanging heat in counter-current between the output gas from the catalytic reforming (6) to be desulphurized and the gas already desulphurized, to increase the temperature of said desulphurized gas;
the second exchanger (12) being placed downstream and exchanging heat between the output gas from catalytic reforming (6) coming from first exchanger (8) and a water-vapour current (AV) in order to cool said output gas from catalytic reforming before its desulphurization in the catalytic reactor (10); and **in that**:
it also comprises a feedback line (R) suitable for feeding back the desulphurized output gas of the catalytic reactor (10) to the first exchanger of the plate-type heat exchanger in order to increase its temperature by counter-current heat exchange with the gas to be desulphurized.

2. The apparatus according to the preceding claim, **characterized in that** said feedback line (R) is connected to first exchanger (8) bypassing the second exchanger (12).

3. The apparatus according to the preceding claims, **characterized in that**, the static mixer/burner (4), is suitable for mixing vaporized hydrocarbon from a first line (I) and reaction vapour from a second line (V) with process air from a third line (A) at a temperature greater than the self-ignition point before being fed to said catalyst bed (6).

4. A method of integration in an apparatus according to one of the preceding claims of an autothermal reformer and a synthesis gas desulphuration device to be used in fuel cells, **characterized in that** the output gases from the catalytic reforming are cooled to the desulphurisation temperature before their inlet into the desulphuration device, and the temperature of the output gas after desulphuration is increased to be in line with the requirements of the fuel cells, said increase being carried out without additional fuel consumption through the counter-current heat exchange between the gas to be desulphurized and the already desulphurized gas.

## Patentansprüche

1. Vorrichtung zur Herstellung von Wasserstoff und Synthesegas durch autothermale Reformierung von flüssigen Kohlenwasserstoffen, umfassend:
- einen statischen Mischer (4) zum Mischen der verdampften Kohlenwasserstoffe und Dampf;
- ein monolithisches Edelmetall-Katalysatorbett (6);
- eine Platten-Typ Struktur (S) für den Wärmetauscher;
- einen katalytischen Reaktor (10), um während der Reformierungsreaktion gebildetes H2S zu entfernen,
- ein metallisches Gehäuse, welches die oben genannten Elemente umschließt,
**dadurch gekennzeichnet, dass**:
- das Bett des monolithischen Edelmetall-Katalysators sich zur autothermalen Reformierung der Mischung aus verdampften Kohlenwasserstoffen, Luft und Dampf (Wasserdampf) eignet, welche von dem statischen Mischer mit einer Temperatur von 950 bis 1000°C und einem Druck von 10 bar zugeführt wird;
- der Platten-Typ Wärmetauscher (S) dazu geeignet ist, das von der Reformierungsreaktion gebildete Gas bis zur Entschwefelungstemperatur zu kühlen;
- der Wärmetauscher (S) aus zwei Tauschern in Serie besteht, der erste Tauscher (8) stromaufwärts angebracht ist und Wärme im Gegenstrom zwischen dem Outputgas der katalytischen Reformierung (6), welches entschwefelt werden soll und dem bereits entschwefelten Gas tauscht, um die Temperatur des entschwefelten Gases zu erhöhen;
der zweite Tauscher (12) stromabwärts angebracht ist und Wärme zwischen dem Outputgas der katalytischen Reformierung (6,) welches vom ersten Tauscher (8) kommt und einem Wasserdampfstrom (AV), um das Outputgas der katalytischen Reformierung vor der Entschwefelung im katalytischen Reaktor (10) zu kühlen tauscht;
und dadurch, dass:
auch eine Rückführleitung (R) umfasst ist, geeignet zum Rückführen des entschwefelten Outputgases des katalytischen Reaktors (10) in den ersten Tauscher des Platten-Typ Wärmetauschers, um die Temperatur durch Wärmetausch im Gegenstrom mit dem zu entschwefelndem Gas zu erhöhen.

2. Vorrichtung nach dem vorangegangenem Anspruch, **gekennzeichnet dadurch, dass** die Rückführleitung (R) mit dem ersten Tauscher (8) verbunden ist und den zweiten Tauscher (12) umgeht.

3. Vorrichtung nach den vorangegangenen Ansprüchen, **gekennzeichnet dadurch, dass** der statische Mischer/Brenner (4) geeignet ist, verdampfte Kohlenwasserstoffe von einer ersten Leitung (I) und Reaktionsdampf von einer zweiten Leitung (V) mit Prozessluft von einer dritten Leitung (A) zu mischen, bei einer Temperatur größer als dem Selbstentzündungspunkt, bevor ins Katalysatorbett (6) eingespeist wird.

4. Verfahren zur Integration eines autothermalen Reformers und einer Vorrichtung zum Entschwefeln von Synthesegas in eine Vorrichtung nach einem der vorangegangen Ansprüche zur Verwendung in Brennstoffzellen, **gekennzeichnet dadurch, dass** die Outputgase der katalytischen Reformierung auf die Entschwefelungstemperatur gekühlt werden, bevor sie in die Entschwefelungsvorrichtung eingeleitet werden, und dass die Temperatur des Outputgases nach der Entschwefelung erhöht wird, in Übereinstimmung mit den Anforderungen von Brennstoffzellen, wobei die Erhöhung ohne zusätzlichen Brennstoffverbrauch durch den Wärmetauscher im Gegenstrom zwischen dem zu entschwefelndem Gas und dem bereits entschwefelten Gas durchgeführt wird.

## Revendications

1. Appareil pour la production d'hydrogène et de gaz de synthèse par reformage autothermique d'hydrocarbures liquides comprenant :
- un mélangeur statique (4) pour mélanger l'hydrocarbure vaporisé et la vapeur ;
- un lit de catalyseur en métal noble monolithique (6) ;
- une structure de type à plaques (S) pour l'échangeur de chaleur
- un réacteur catalytique (10) pour éliminer l'H2S formé durant la réaction de reformage,
- un boîtier métallique (14) enfermant les éléments précités,
**caractérisé en ce que** :
- le lit de catalyseur en métal noble monolithique est adapté pour le reformage autothermique du mélange d'hydrocarbures vaporisés, d'air et de vapeur (vapeur d'eau), alimenté à partir du mélangeur statique à une température de 950 à 1000°C et une pression de 10 bar ;
- l'échangeur de chaleur de type à plaques (S) est adapté pour refroidir le gaz produit par la réaction de reformage jusqu'à la température de désulfuration ;
- l'échangeur de chaleur (S) se compose de deux échangeurs en série, le premier échangeur (8) étant placé en amont et échangeant de la chaleur en contre-courant entre le gaz de sortie provenant du reformage catalytique (6) à désulfurer et le gaz déjà désulfuré, pour augmenter la température dudit gaz désulfuré ;
le deuxième échangeur (12) étant placé en aval et échangeant de la chaleur entre le gaz de sortie provenant du reformage catalytique (6) arrivant du premier échangeur (8) et un courant de valeur d'eau (AV) de manière à refroidir ledit gaz de sortie provenant du reformage catalytique avant sa désulfuration dans le réacteur catalytique (10) ;
et **en ce que** :
il comprend également une ligne de retour (R) adaptée pour renvoyer le gaz de sortie désulfuré du réacteur catalytique (10) au premier échangeur de l'échangeur de chaleur de type à plaques de manière à augmenter sa température par un échange de chaleur en contre-courant avec le gaz à désulfurer.

2. Appareil selon la revendication précédente, **caractérisé en ce que** ladite ligne de retour (R) est connectée au premier échangeur (8) en contournant le deuxième échangeur (12).

3. Appareil selon les revendications précédentes, **caractérisé en ce que** le mélangeur statique/brûleur (4) est adapté pour mélanger de l'hydrocarbure vaporisé provenant d'une première ligne (I) et une vapeur de réaction provenant d'une deuxième ligne (V) avec de l'air de procédé provenant d'une troisième ligne (A) à une température supérieure au point d'auto-inflammation avant d'être acheminé audit lit de catalyseur (6).

4. Procédé d'intégration dans un appareil selon une des revendications précédentes d'un reformeur autothermique et d'un dispositif de désulfuration de gaz de synthèse pour être utilisé dans des piles à combustible, **caractérisé en ce que** les gaz de sortie provenant du reformage catalytique sont refroidis à la température de désulfuration avant leur entrée dans le dispositif de désulfuration, et la température du gaz de sortie après la désulfuration est augmentée pour être alignée avec les exigences des piles à combustible, ladite augmentation étant exécutée sans consommation additionnelle de combustible par le biais de l'échange de chaleur en contre-courant entre le gaz à désulfurer et le gaz déjà désulfuré.
